# EUROPEAN PATENT SPECIFICATION

(11) **EP 4 063 786 B1**
(45) Date of publication and mention of the grant of the patent: **21.05.2025**
(21) Application number: 22162608.8
(22) Date of filing: 17.03.2022
(51) Int. Cl.: G01C 9/16, G01C 9/14

(54) **TILT ESTIMATION**
NEIGUNGSSCHÄTZUNG
ESTIMATION D'INCLINAISON

(30) Priority: 24.03.2021 IN 202141012940
(43) Date of publication of application: 28.09.2022
(73) Proprietor: TVS Motor Company Limited, 600006 Chennai (IN)
(72) Inventor: Suresh, Anandhu, 600 006 Chennai (IN); Manoharan, Santhosh, 600 006 Chennai (IN); Sharma, Abhishek, 600 006 Chennai (IN); Mohan, Barath, 600 006 Chennai (IN); Raju, Karanam Venkata Manga, 600 006 Chennai (IN)
(74) Representative: Patentanwaltskanzlei Matschnig & Forsthuber OG

(56) References cited:
- US-A- 5 112 126
- US-A1- 2006 168 833
- GUI PENGFEI ET AL: "MEMS based IMU for tilting measurement: Comparison of complementary and kalman filter based data fusion", 2015 IEEE 10TH CONFERENCE ON INDUSTRIAL ELECTRONICS AND APPLICATIONS (ICIEA), IEEE, 15 June 2015 (2015-06-15), pages 2004 - 2009, XP032816201, DOI: 10.1109/ICIEA.2015.7334442
- ANANDHU SURESH ET AL: "A Novel Method to Estimate Tilt Angle of a Body using a Pendulum", ARXIV.ORG, CORNELL UNIVERSITY LIBRARY, 201 OLIN LIBRARY CORNELL UNIVERSITY ITHACA, NY 14853, 1 February 2022 (2022-02-01), XP091149009

## Description

### BACKGROUND

Devices, such as automobiles, robots, drones, etc., are capable of travelling at high speeds. These devices may have to travel at high speeds in different orientations. In different situations, it may be necessary to estimate orientation parameters of the devices. For instance, there is a possibility that a body, such as a two-wheeler, may roll over if the orientation of the body, such as angle of tilt, is above a permissible limit. Such regulation of orientation may find various applications, such as in cruise control in vehicles or in cornering cruise control in two-wheeler vehicles where the throttle may be regulated depending on the angle of tilt of the vehicle. Accordingly, the devices are provided with different systems and mechanisms capable of measuring orientation to estimate the orientation of the devices.

### BRIEF DESCRIPTION OF DRAWINGS

The detailed description is provided with reference to the accompanying figures. It should be noted that the description and the figures are merely examples of the present subject matter and are not meant to represent the subject matter itself.
FIG. 1 illustrates a perspective view of an angular measurement device, according to one aspect of the present subject matter;
FIG. 2 illustrates an isometric view of the angular measurement device, in accordance with an example of the present subject matter;
FIG. 3 illustrates an exploded view of the angular measurement device, in accordance with an example of the present subject matter;
FIG. 4 illustrates a perspective view of a tilt measurement system secured inside an outer casing, in accordance with an example of the present subject matter;
FIG. 5 illustrates an exploded view of the tilt measurement system, in accordance with an example of the present subject matter;
FIG. 6 illustrates a perspective view of the tilt measurement system without the outer casing, in accordance with an example of the present subject matter;
FIG. 7 illustrates an isometric view of the tilt measurement system without the outer casing, in accordance with an example of the present subject matter;
FIG. 8 illustrates a schematic block diagram of the tilt measurement system for estimating angle of tilt of the component, in accordance with an example of the present subject matter;
Fig. 9 illustrates a method for estimating angle of tilt of the component, in accordance with an example of the present subject matter;
Fig. 10 illustrates a schematic block diagram of the tilt measurement system for estimating angle of tilt of the component, in accordance with another example of the present subject matter;
FIG. 11 illustrates a method for estimating angle of tilt of the component, in accordance with another implementation of the present subject matter;
FIG. 12 illustrates a perspective view of a vehicle with the tilt measurement system mounted to the vehicle, in accordance with an example of the present subject matter;
FIG. 13 illustrates an isometric view of the vehicle with the tilt measurement system mounted to the vehicle, in accordance with an example of the present subject matter;
Fig. 14 illustrates a graph representing the errors associated in determining the angle of tilt of component, in accordance with an example of the present subject matter;
FIG. 15 illustrates a graph representing values of the angle of tilt of the component with the tilt measurement system mounted to the vehicle at varied heights from the ground surface, in accordance with an example of the present subject matter;
FIG. 16 illustrates a graph representing values of angular displacement of the suspended element when the suspended element is provided with and without pre-determined damping, in accordance with an example of the present subject matter.

Throughout the drawings, identical reference numbers designate similar elements, but may not designate identical elements. The figures are not necessarily to scale, and the size of certain parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

Accurate estimation of orientation of a body, such as a mechanical system, is relevant for control systems for use in the mechanical systems, such as automobiles, robotic devices, and other machines. For example, to develop driver assistance systems in vehicle stability control for automobiles, or to control motion of robotic joints, measurement of orientation angle with respect to a frame of reference has to be ascertained. Various conventional techniques are known for determining orientation of such systems.

In one of the techniques, encoders are used to measure the joint angle of robotic devices. However, such measuring techniques are effective for robots that are fully actuated and are fixed to not be translated from its position, for example robot arms used in assembly lines. For mobile or under-actuated robots, orientation of the robot with respect to a frame, such as a ground frame, is necessary. However, encoders are not effective in measuring joint angles of mobile robots. Further, a tilt sensor for determining the tilt of a device is disclosed in US20060168833A1. The tilt sensor comprises a magnet and a pendulum, and it is structured to detect changes in magnetic field directions caused due to changes in the position of the pendulum by using a Hall element. Furthermore, the use of Kalman filters in a MEMS based IMU for tilting measurement is disclosed in GUI PENGFEI ET AL: "MEMS based IMU for tilting measurement: Comparison of complementary and kalman filter based data fusion", "2015 IEEE 10TH CONFERENCE ON INDUSTRIAL ELECTRONICS AND APPLICATIONS (ICIEA), IEEE, 15 June 2015 (2015-06-15), pages 2004-2009".

In other techniques, variety of sensors are deployed to measure various orientation parameters. For instance, gyroscopic sensors for measuring rotation of the body, accelerometers for measuring a component of acceleration due to gravity along different axes, or, for such purposes, an inertial measurement unit (IMU) sensor is used. A six axis IMU consists of a 3-axis gyroscopic sensor and a 3-axis accelerometer. The IMU sensor is used to measure roll, yaw and pitch angles of the body by combining gyroscopic measurements and accelerometer measurements. The 3-axis gyroscopic sensor measures rate of rotation along each of the three principal axes that include x, y and z axes that are perpendicular to each other. Angles of rotation of the body, indicating the value of tilt, along the three axes may then be determined by integrating the rates of rotation with respect to time. In order to obtain absolute values of rotational angles, the initial conditions of the body must be known. However, in a scenario where a vehicle travels along a curved pathway, the initial condition of the vehicle cannot be easily determined. Further, an incorrect determination of the initial condition of the vehicle may adversely affect the rates of rotation being ascertained. Since the rates of rotation are being integrated, even a small bias error may result
in a large deviation from the absolute value.

In addition, the 3-axis accelerometer of the IMU sensor may also measure the rotational angle by obtaining the acceleration due to gravity along the three principal axes. In case of static conditions, in principle, the vector sum of acceleration measured by the accelerometer along the principal axes should be equal to 1G. However, in case of dynamic conditions, for example, when the accelerometer is mounted to an accelerating or rotating body, the vector sum along the principal axes of accelerometer changes. As a result, the rotational angle measured by the accelerometer is not the equal to the absolute value. In other words, in dynamic conditions, the tilt measured using the IMU sensor may not be accurate.

At the same time, the IMU sensor may also be used to measure the orientation angle of the body by combining the gyroscopic measurement and accelerometer measurement. Different techniques are employed with which the gyroscopic sensor and accelerometer values are used together to eliminate the shortcomings of the individual sensors. For instance, a complementary filter may use angular rate values, ascertained by the gyroscopic sensor, to obtain the short-term dynamic response. Further, the angular measurement, ascertained by the accelerometers, may be used to correct drift error occurring over time. However, in mechanical systems which have a high level of vibrations, for example, automobiles, the accelerometer data may include a high level of noise, which may result in an inaccurate estimate of the orientation of the body.

Another conventional technique for estimating orientation of systems, particularly for vehicles, involves using multiple inputs from a number of sensors. For example, the orientation mechanism or system, such as cruise control system or cornering control system, may receive inputs from roll, pitch, and yaw sensors, the lateral and longitudinal accelerometers, as well as from sensors mounted on suspension of the vehicle. However, such systems are expensive due to the large number of sensors used. Further, such large quantities of sensorial data require that the computational capability of the system onboard the vehicle is high to be able to process the data.

Few other conventional techniques involve using a camera to record a sequence of images of the vehicle's surroundings. One or more characteristics of the vehicle surroundings, such as lane markings, are extracted and tracked over a period of time. Any change in position of the characteristics in the sequence of images is used to determine the direction in which the camera is turned. The angle of tilt of the vehicle can be estimated based on the movement of the camera using different image processing algorithms. However, this technique is not suitable in situations where the camera cannot work efficiently, for example, in absence of light. Further, it may not be possible to continuously track a certain characteristic of vehicle's surroundings, for example, in case where the characteristics are not present in vehicle's surroundings for a considerable amount of time. In addition, techniques involving image processing usually require high computational resources and are expensive.

The present subject matter discloses techniques to estimate angle of tilt of a mechanical system. The mechanical system can include, for example, an automobile or a robotic system. According to an aspect, the technique for estimating angle of tilt of the mechanical system, as envisaged by the present subject matter, requires few number of sensors and works effectively even in environments which are affected
by vibration. For example, the present subject matter can be employed to identify the orientation of robots, vehicles, or drones. In addition, the technique involves the consumption of considerably low computational resources to measure the orientation of the body and is, therefore, efficient as well as

According to the present invention, a tilt measurement system for estimating angle of tilt of a component and a method for measuring tilt angle of a component are provided as set forth in independent claims 1 and 12 respectively.

According to the present subject matter, an angular measurement device for measuring an angle of tilt includes a fixable base and a suspended element mounted to the fixable base. The suspended element, such as a pendulum, can undergo oscillatory movement with respect to the fixable base. The angular measurement device further includes an angular position sensor which is operably coupled to a shaft of the suspended element. When the suspended element exhibits an oscillatory movement, the angular position sensor measures an angular displacement of the shaft of the suspended element with respect to the fixable base. In one example, the angular position sensor may be a potentiometer. The potentiometer converts the angular motion of the suspended element into electrical signals which may be used by an on-board controller to determine the angle of tilt of the fixable base.

According to said aspect of the present subject matter, the angular displacement of the suspended element may be measured from a neutral position of the suspended element. Based on the angular displacement of the suspended element, the angle of tilt of the fixable base can be obtained. In one example, the neutral position of the suspended element is the equilibrium position. In other words, even in a situation where the fixable base tilts, the suspended element tries to align with the neutral position. Therefore, the initial conditions of the suspended element can be estimated continuously. Accordingly, the absolute values of the angle of tilt of the fixable base can be easily obtained at any particular time. Therefore, the present subject matter provides a continuous and precise estimation of the orientation of the fixable base.

Further, the suspended element may be provided with a pre-determined damping. The pre-determined damping nullifies undesirable oscillations which may occur due to inertia of the suspended element. In addition, the pre-determined damping helps in reducing the adverse effect of vibrations and noise. Therefore, the present subject matter provides a cost-effective and simplistic solution for estimating orientation of the fixable base which can be used in dynamic conditions without employing large number of sensors. In one example, the angular measurement device may include a damping unit to dampen the oscillatory movement of the suspended element. The damping helps, in addition to the above, in reducing the overshoot of the suspended element. As a result, the error in estimation of the angular displacement of the suspended element decreases. Further, the damping unit also passively filters some of the vibration from being transferred to the suspended element. This results in effectively reducing the noise in the measurements made by the angular measurement device.

In addition, the present subject matter envisages a tilt measurement system employing the angular measurement device, described above, along with an angular rate measurement sensor. The angular rate measurement sensor estimates the rate of change of orientation of the body, for example, the rate of change of angle of tilt of the body. Accordingly, the provision of the angular measurement device as well as the angular rate measurement sensor allows for accurate prediction of the angle of tilt in an efficient manner. Further, the present subject matter also provides a cost-effective technique for estimating the orientation of the body as only two sensors can be used to accurately predict the angle of tilt. Additionally, the computational resources required to estimate the orientation of the body are also considerably less and the tilt measurement system can be employed in devices having less space, such as small vehicles including two-wheeler vehicles and drones.

In one example, the angular rate measurement sensor may be a microelectromechanical systems (MEMS) gyroscopic sensor. The tilt measurement system also includes a control unit operably coupled to the angular position sensor and the angular rate measurement sensor. The control unit receives inputs from the angular position sensor and the angular rate measurement sensor and processes the received inputs to determine the angle of tilt of a component with respect to a reference datum, for example, ground. In addition, the present subject matter also envisages a vehicle using the tilt measurement system mounted to a vehicular frame of the vehicle. By determining the angle of tilt of the fixable base, as per the foregoing techniques, the control unit can determine the angle of tilt of the vehicle.

The present subject matter is further described with reference to the accompanying figures. Wherever possible, the same reference numerals are used in the figures and the following description to refer to the same or similar parts. It should be noted that the description and figures merely illustrate principles of the present subject matter. It is thus understood that various arrangements may be devised that, although not explicitly described or shown herein, encompass the principles of the present subject matter..

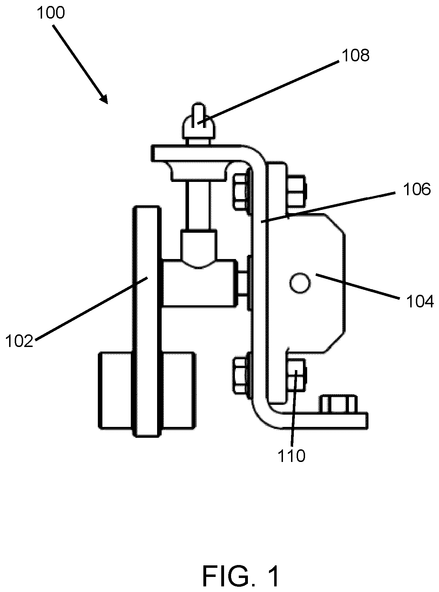

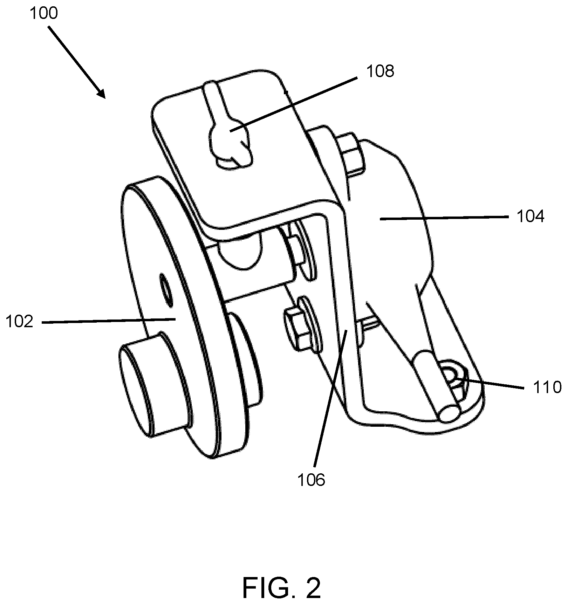

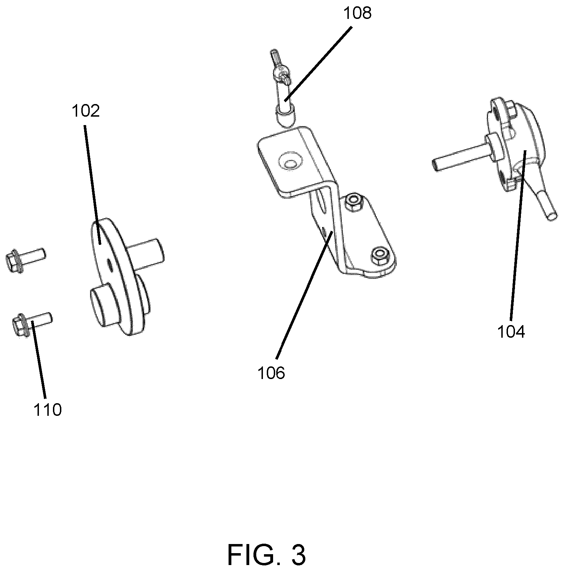

FIG. 1 illustrates a perspective view of an angular measurement device 100, according to one aspect of the present subject matter. FIG. 2 illustrates an isometric view of the angular measurement device 100, according to an aspect of the present subject matter. FIG. 3 illustrates an exploded view of the angular measurement device 100, according to an aspect of the present subject matter. For the sake of brevity and ease of understanding, FIGS. 1, 2 and 3 have been discussed in conjunction with each other.

The angular measurement device 100 for measuring an angle of tilt includes a suspended element 102 and an angular position sensor 104 operably coupled to the suspended element 102. The angular measurement device 100 further includes a fixable base 106 over which the suspended element 102 and the angular position sensor 104 are mounted. In one example, the suspended element 102 and the angular position sensor 104 can be mounted to the fixable base 106 using temporary fastening means, such as fasteners 110. In another example, the suspended element 102 and the angular position sensor 104 can be mounted to the fixable using permanent fastening means, such as welding.

The suspended element 102 can undergo oscillatory movement with respect to the fixable base 106. For instance, when the fixable base 106 tilts, the suspended element 102 can undergo oscillations. In an example, the suspended element 102 may be a pendulum. In another example, the suspended element 102 may be a buoyant pendulum. The angular position sensor 104 measures an angular displacement of the shaft of the suspended element 102 with respect to the fixable base 106. The angular position sensor 104 is coupled with a shaft of the suspended element 102. In one example, the angular position sensor 104 may be a potentiometer. The potentiometer converts the angular motion of the suspended element 102 into electrical signals which may be used by an on-board controller, such as a control unit, to determine the angle of tilt of the fixable base 106. In another example, the angular position sensor 104 may be one of hall-effect sensor or an encoder.

According to the present aspect, the orientation of the fixable base 106 can be estimated without using large number of sensors. Moreover, the computational resources required to estimate the orientation is considerably less. Accordingly, the orientation estimation technique is also cost effective. Further, the orientation of a mechanical device onto which the fixable base 106 is mounted on can also be estimated. The mechanical device may be a robot, a drone, an automobile, etc.

According to the present subject matter, the angular displacement of the suspended element 102 may be measured from a neutral position of the suspended element 102. Based on the angular displacement of the suspended element 102, the angle of tilt of the fixable base 106 can be obtained. In one example, the neutral position of the suspended element 102 is the equilibrium position. When the suspended element 102 is a pendulum, the neutral position of the suspended element 102 will be its lowest point. The suspended element 102 is biased towards the neutral position. In other words, even in a situation where the fixable base 106 tilts, the suspended element 102 tries to align with the neutral position. Therefore, the initial conditions of the suspended element 102 can be estimated continuously. Accordingly, the absolute values of the angle of tilt of the fixable base 106 can be easily obtained at any particular time. Therefore, the present subject matter provides a continuous and precise estimation of the orientation of the fixable base 106. In one example, the suspended element 102 may include two pendulums. In another example, the suspended element 102 may be a double pendulum.

Further, the suspended element 102 may be provided with a pre-determined damping. By providing pre-determined damping to the suspended element 102, the undesirable oscillations which may occur due to inertia of the suspended element 102 can be negated. In addition, the pre-determined damping helps in reducing the adverse effect of vibrations and noise. Therefore, the present subject matter provides a cost-effective and simplistic solution for estimating orientation of the fixable base which can be used in dynamic conditions.

In an example, the angular measurement device 100 may include a damping unit 108. The damping unit 108 dampens the oscillatory movement of the suspended element 102. The damping unit 108 may be provided in form of a damping screw. The damping unit 108 can be inserted into an opening provided on the fixable base 106. The damping unit 108 is positioned in a manner such that it is oriented radially outwards of the shaft of the pendulum. The damping unit 108 can be inserted into the hole provided on the fixable base 106. The hole may include threads. The damping unit 108 may include a knob and a brush. The brush is in contact with the shaft of the suspended element 102. By rotating knob of the damping unit 108, the force applied by the damping unit 108 on the shaft of the suspended element 102 can be varied. Accordingly, the damping of the suspended element 102 can be varied.

The damping helps, in addition to the above, in reducing the overshoot of the suspended element 102. As a result, the error in estimation of the angular displacement of the suspended element 102 decreases. Further, the damping unit 108 also passively filters some of the vibration from being transferred to the suspended element 102. This results in effectively reducing the noise in the measurements made by the angular measurement device 100.

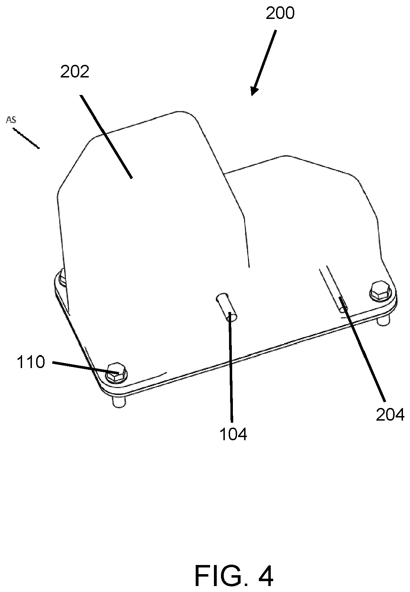

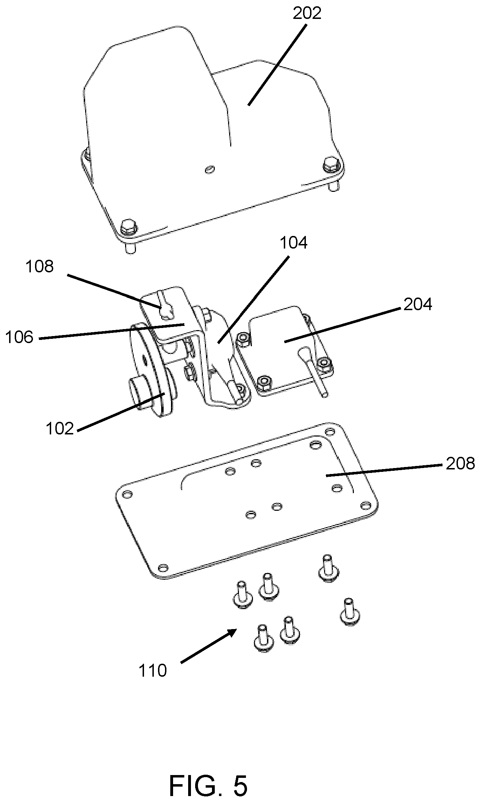

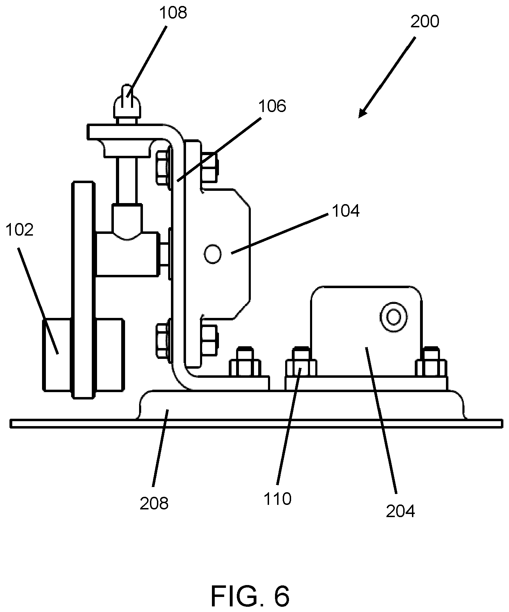

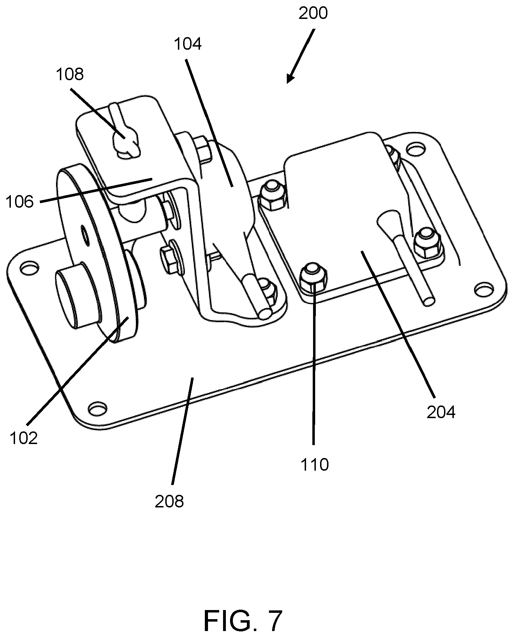

In addition, the present subject matter envisages a tilt measurement system 200 employing the angular measurement device 100, described above, along with an angular rate measurement sensor 204. FIG. 4 illustrates a perspective view of the tilt measurement system 200 secured inside an outer casing 202, in accordance with an example of the present subject matter. FIG. 5 illustrates an exploded view of the tilt measurement system 200, in accordance with an example of the present subject matter. FIG. 6 illustrates a perspective view of the tilt measurement system 200 without the outer casing 202, in accordance with an example of the present subject matter. FIG. 7 illustrates an isometric view of the tilt measurement system 200 without the outer casing 202, in accordance with an example of the present subject matter. For the sake of brevity and ease of understanding, FIGS. 4, 5, 6 and 7 have been discussed in conjunction with each other.

The tilt measurement system 200 measures an angle of tilt of a component. In one example, the component may be a part of a mechanical device having the tilt measurement system 200 mounted thereto. For example, the component may be a part of a vehicle, such as the chassis. The angular measurement device 100 may be mounted to one side of the chassis and the angular rate measurement sensor 204 may be mounted to another side of the chassis. In such case, there is a possibility that the measured values from the angular measurement device 100 and the angular rate measurement sensor 204 are different. Therefore, the angular measurement device 100 and the angular rate measurement sensor 204 will have to be calibrated. In another example, the component may be a part of the tilt measurement system 200. For instance, the component may be a base plate 208 onto which the angular measurement device 100 and the angular rate measurement sensor204 are mounted. In such case, the angular measurement device 100 and the angular rate measurement sensor 204 measure the change in orientation of the same element. i.e. the base plate 208. Therefore, there is no need to calibrate the sensors.

The tilt measurement system 200 includes an outer casing 202 mounted over a base plate 210. The outer casing 202 restricts the entry of unwanted elements, such as moisture. The fixable base 106 is be mounted to the component. In one example, the fixable base 106and
component are permanently attached to each other using different joining techniques, such as welding. In another example, the fixable base 106 can be fixedly mounted to the component using temporary fastening means, such as fasteners 110.

The angular rate measurement sensor 204 is mounted to the component. The angular rate measurement sensor 204 measures rate of change of orientation of the component. In one example, the angular rate measurement sensor 204 may bea microelectromechanical systems (MEMS) gyroscopic sensor. The tilt measurement system 200 further includes a control unit 206 operably coupled to the angular rate measurement sensor 204 and the angular position sensor 104. The control unit 206 receives inputs from the angular position sensor 104 and the angular rate measurement sensor 204, and then processes the received inputs to estimate the angle of tilt of the component with respect to a reference datum, for example, ground. Therefore, the angle of tilt of the component can be estimated using 2 sensors only. Moreover, the computational resources required to estimate the orientation is considerably less. Accordingly, the orientation estimation technique is also cost effective. Further, the orientation of a mechanical device onto which the tilt measurement system 200 is mounted on can also be estimated. The mechanical device may be a robot, a drone, an automobile, etc.

In one example, the control unit 206 can be implemented as a microcontroller, a microcomputer, and/or any other device that manipulates signals based on operational instructions. According to said embodiment, the control unit 206 can include a processor and a device memory. The processor can be a single processing unit or a number of units, all of which could include multiple computing units. The processor may be implemented as one or more microprocessors, microcomputers, microcontrollers, digital signal processors, central processing units, state machines, logic circuitries, and/or any devices that manipulate signals, based on operational instructions. Among other capabilities, the processor(s) is provided to fetch and execute computer-readable instructions stored in the device memory. The device memory may be coupled to the processor and can include any computer-readable medium known in the art including, for example, volatile memory, such as Static-Random Access Memory (SRAM) and Dynamic-Random Access Memory (DRAM), and/or non-volatile memory, such as Read Only Memory (ROM), erasable programmable ROM, flash memories, hard disks, optical disks, and magnetic tapes.

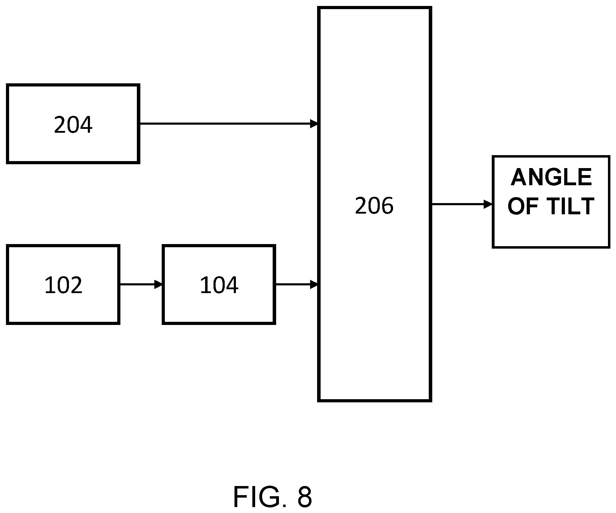

FIG. 8 illustrates a schematic block diagram of the tilt measurement system 200 for estimating angle of tilt of the component, in accordance with an example of the present subject matter. The angular position sensor 104 measures the angular displacement of the suspended element 102 from the neutral position with respect to the fixable base 106. The angular rate measurement sensor 204 measures the rate of change of orientation of the component. The control unit 206 receives inputs from the angular position sensor 104 and the angular rate measurement sensor 204. Based on the received inputs, the control unit 206 estimates the angle of tilt of the component with respect to a reference datum, for example, ground.

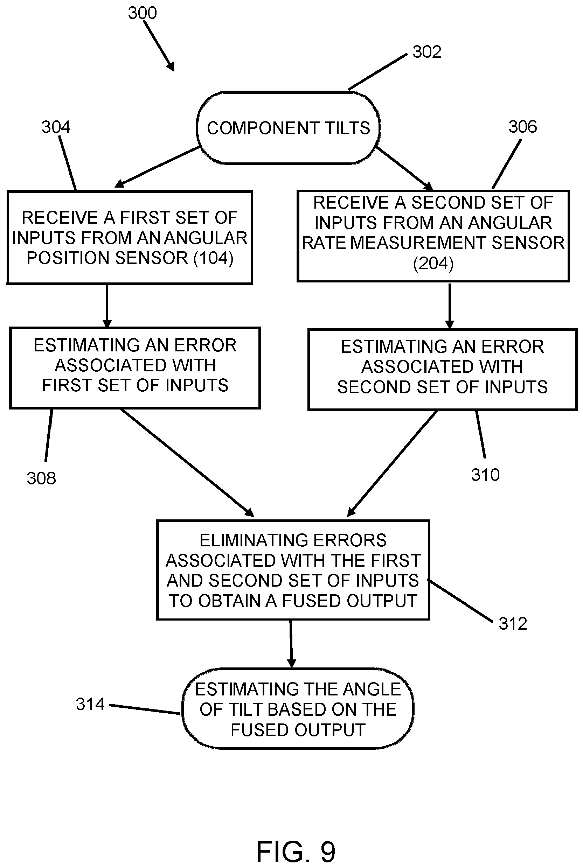

Fig. 9 illustrates a method 300 for estimating angle of tilt of the component, in accordance with one implementation of the present subject matter. Referring to block 302, the angular position sensor 104 and the angular rate measurement sensor 204 detects that the component has tilted from its original position. The angular position sensor 104 measures the angular displacement of the suspended element 102 from the neutral position with respect to the fixable base 106. The angular rate measurement sensor 204 measures the rate of change of orientation of the component. At block 304, the control unit 206 receives a first set of inputs, based on the displacement of the suspended element 102 with respect to the fixable base 106, from the angular position sensor 104. At block 306, the control unit 206 receives a second set of inputs, based on the rate of change of orientation of the component, from the angular rate measurement sensor 204. Based on the received inputs, the control unit 206 estimates the angle of tilt of the component with respect to a reference datum, for example, ground.

However, it is possible that the data transmitted by the angular position sensor 104 and the angular rate measurement sensor 204 may be different from the actual values due to vibrations and noise. In other words, the inputs received from the angular position sensor 104 and the angular rate measurement sensor 204 may include errors. To compute the actual values, the control unit 206 may employ different sensor fusion algorithms to process the data received from the angular position sensor 104 and the angular rate measurement sensor 204. For instance, the control unit 206 may employ Bayesian filter algorithm or Fusion filter algorithm to process the first and second set of inputs.

The control unit 206 conditions the received first set of inputs and the second set of inputs. At block 308, the control unit 206 estimates the error associated with the first set of inputs using any sensor fusion algorithm. At block 310, the control unit 206 employs the sensor fusion algorithm to estimate the error associated with the second set of inputs. At block 312, the control unit 206 eliminates the estimated errors to obtain a fused output using the sensor fusion algorithms. At block 314,
the control unit 206 calculates the angle of tilt of the component with respect to a reference datum based on the fused output.

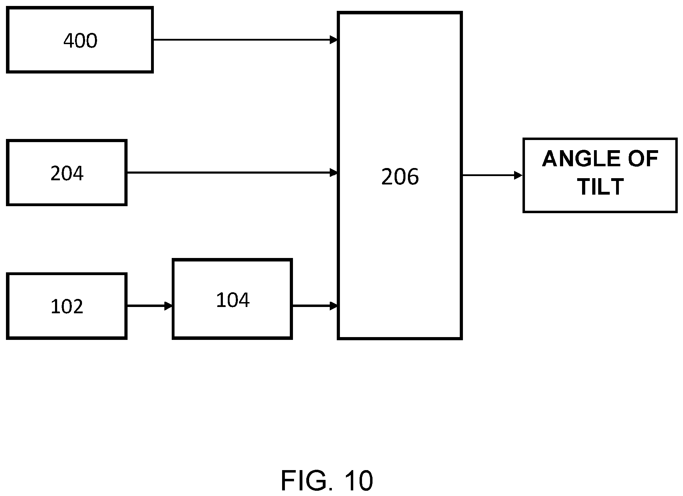

Fig. 10 illustrates a schematic block diagram of a tilt measurement system 200 for estimating angle of tilt of a component, in accordance with another example of the present subject matter. In highly precise applications, the tilt measurement system 200 may also include an accelerometer sensor 400 operably coupled to the control unit 206. The accelerometer sensor 400 measures the angle of tilt by measuring component of acceleration due to gravity along different axes. The control unit 206 receives a third set of inputs from the accelerometer sensor 400. Further, the control unit 206 may estimate the angle of tilt of the component using at least one of the first, second or third set of inputs. By using a third sensor to estimate the angle of tilt, the cost and computational resources required to process the data received from the three sensor increases. However, the third sensor, i.e. the accelerometer sensor 400, is only used in situations which require highly accurate estimation of the angle of tilt.

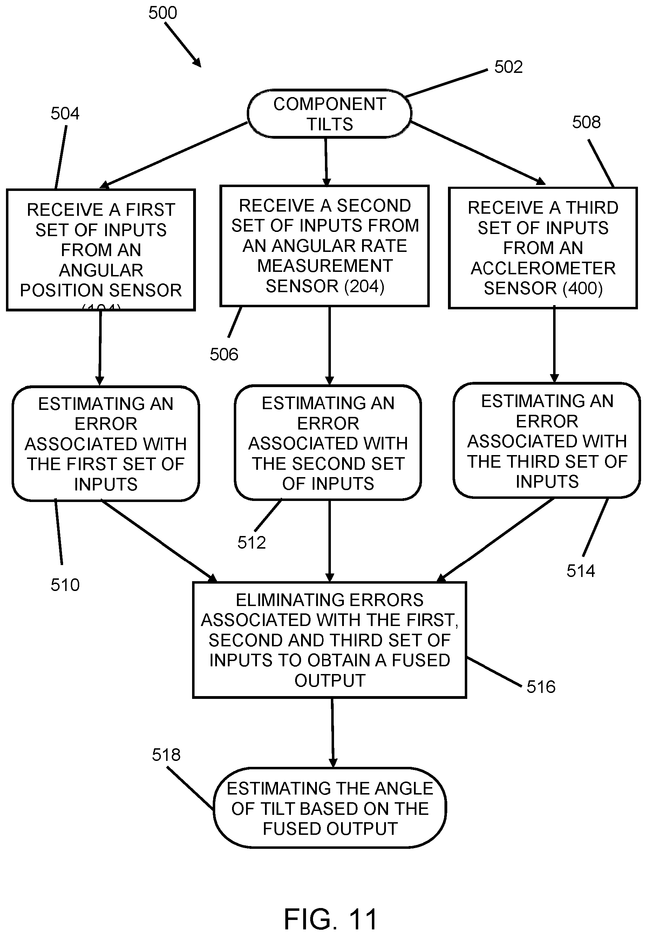

FIG. 11 illustrates a method 500 for estimating angle of tilt of the component, in accordance with another implementation of the present subject matter. In one example, the tilt measurement system 200 may include the accelerometer sensor 400. Referring to block 502, the angular position sensor 104, the angular rate measurement sensor 204 and the accelerometer sensor (400) detects that the component has tilted from its original position. The angular position sensor 104 measures the angular displacement of the suspended element 102 from the neutral position with respect to the fixable base 106. The angular rate measurement sensor 204 measures the rate of change of orientation of the component. The accelerometer sensor 400 measures the component of acceleration due to gravity along different axes.

At block 504, the control unit 206 receives a first set of inputs, based on the displacement of the suspended element 102 with respect to the fixable base 106, from the angular position sensor 104. At block 506, the control unit 206 receives a second set of inputs, based on the rate of change of orientation of the component, from the angular rate measurement sensor 204. At block 508, the control unit 206 receives a third set of inputs, based on the component of acceleration due to gravity along different axes, from the accelerometer sensor 400. Based on the received inputs, the control unit 206 estimates the angle of tilt of the component with respect to a reference datum, for example, ground.

However, it is possible that the data transmitted by the angular position sensor 104, the angular rate measurement sensor 204 and the accelerometer sensor 400 may include errors due to vibrations and noise. The control unit 206 may employ different sensor fusion algorithms, such as Bayesian filter algorithm or Fusion filter algorithm, to process the first, second, and third set of inputs to process the data received from the sensors. The control unit 206 processes and conditions the first, set and third set of inputs using the sensor fusion algorithm.

At block 510, the control unit 206, by employing the sensor fusion algorithm, estimates the error associated with the first set of inputs. At block 512, the control unit 206, by employing the sensor fusion algorithm, estimates the error associated with the second set of inputs. At block 514, the control unit 206, by employing the sensor fusion algorithm, estimates the error associated with the third set of inputs. At block 516,
the control unit 206 obtains a fused output by eliminating the errors associated with the first, second and third set of inputs. At block 518, based on the fused output, the control unit 206 estimates the angle of tilt of the component with respect to a reference datum, for example, ground.

The methods 300, 500 may be described in the general context of computer executable instructions. Generally, computer executable instructions can include routines, programs, objects, components, data structures, procedures, engines, functions, etc., that perform particular functions or employ particular abstract data types. The methods 300, 500 may also be practiced in a distributed computing environment where functions are performed by remote processing devices that are linked through a communications network. In a distributed computing environment, computer executable instructions may be located in both local and remote computer storage media, including memory storage devices.

The order in which the methods 300, 500 are described is not intended to be construed as a limitation, and number of the described method blocks can be combined in any order or can be performed in parallel to employ the methods 300, 500 or an alternative method. Additionally, individual blocks may be deleted from the methods 300, 500 without departing from the spirit and scope of the subject matter described herein. Furthermore, the methods 300, 500 can be employed in any suitable hardware, software, firmware, or combination thereof. The methods 300, 500 are explained with reference to the tilt measurement system 200, however, the methods 300, 500 can be employed in other systems as well falling within the single inventive concept.

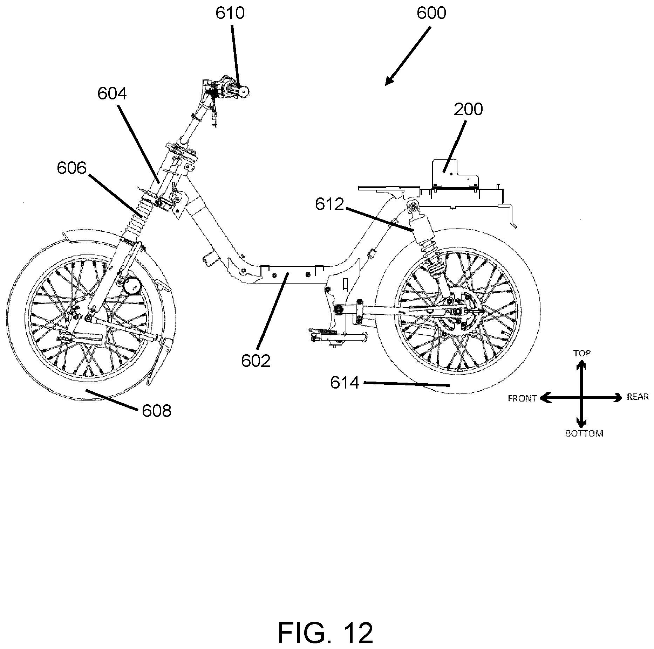

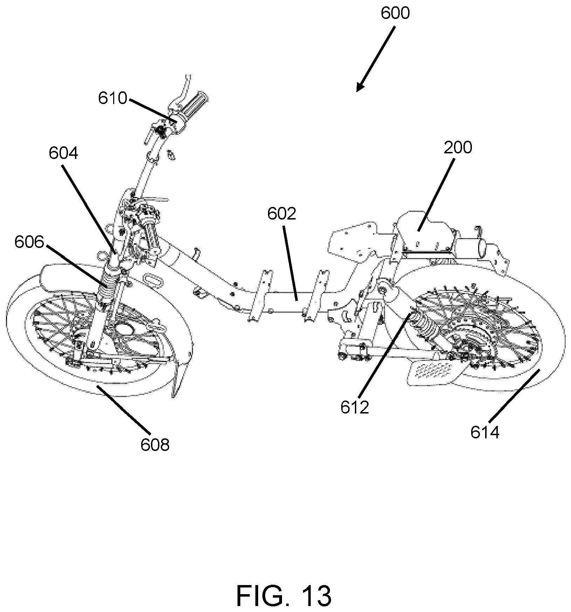

FIG. 12 illustrates a perspective view of a vehicle 600 having the tilt measurement system 200 mounted thereto, in accordance with an example of the present subject matter, whereas FIG. 13 illustrates an isometric view of the vehicle 600. For the sake of brevity and ease of understanding, FIGS. 12 and 13 have been discussed in conjunction with each other.

The vehicle 600 includes a vehicular frame 602, a pivot tube 604, a front suspension 606, a front wheel 608, a handle bar 610, a rear suspension 612 and a rear wheel 614. By determining the angle of tilt of the component, as per the foregoing techniques, the control unit 206can determine the angle of tilt of the vehicle 600. In one example, the tilt measurement system 200 is located at a distance of 400 millimeter (mm) to 900 mm from the ground surface. The axis of suspended element's shaft is aligned with the axis of the vehicle 600 along which the tilt needs to be measured. According to an example, the suspended element 102 may have a mass between 50 to 500 grams and a length of 2 mm to 50 mm. The tilt measurement system 200 may be mounted to the top most position on the device, such as the vehicle 600.

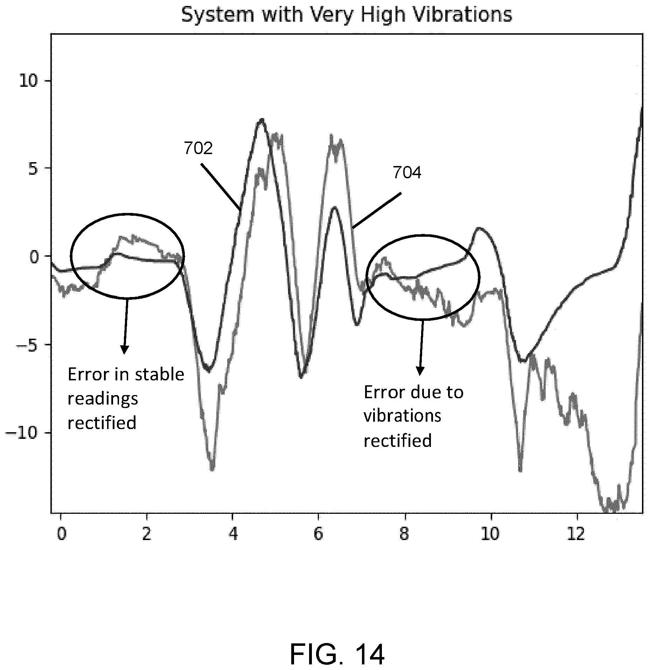

FIG. 14 illustrates a graph representing the errors associated in determining the angle of tilt of the component. As described above, the inputs received from the angular position sensor 104 and the angular rate measurement sensor 204 may include errors due to vibrations and noise. Line 702 represents angle of tilt of the component estimated based on the inputs received from the angular position sensor 104. Line 704 represents angle of tilt of the component estimated based on the inputs received from the angular rate measurement sensor 204. As described above, the control unit 206 may employ a sensor fusion algorithm to estimate the errors associated with the inputs received from the sensors. Further, the control unit 206 obtains a fused output after eliminating the errors associated with the received inputs. The control unit 206 estimates the angle of tilt of the component based on the obtained fused output.

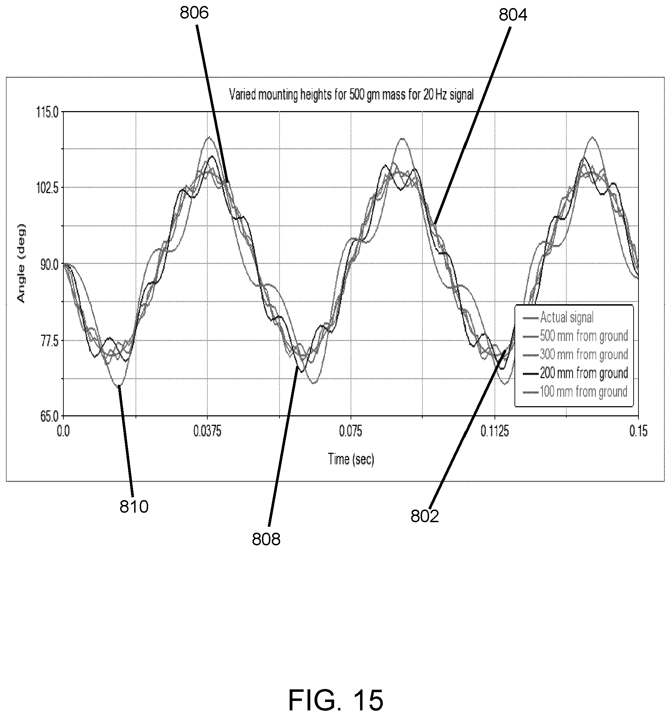

FIG. 15 illustrates a graph representing varies values of the angle of tilt of the component with the tilt measurement system 200 mounted to the vehicle 600 at varied heights from the ground. In one example, the tilt measurement system 200 includes a suspended element 102 having a mass of 500 grams. Line 802 represents actual value of the angle of tilt of the component. Line 804 represents the angle of tilt of the component when the tilt measurement system 200 is mounted at a height of 500 mm from the ground. Line 806 represents the angle of tilt of the component when the tilt measurement system 200 is mounted at a height of 300 mm from the ground. Line 808 represents the angle of tilt of the component when the tilt measurement system 200 is mounted at a height of 200 mm from the ground. Line 810 represents the angle of tilt of the component when the tilt measurement system 200 is mounted at a height of 100 mm from the ground. As is depicted in the graph, the difference
between the estimated value of the angle of tilt of the component and the actual value decreases as the height of the tilt measurement system 200 from the ground increases. Therefore, the present subject matter also envisages that when the tilt measurement system 200 or at least the angular measurement device 100 is mounted on the vehicle 600 to be at a distance of 400 mm to 900 mm from the ground surface, the performance of the tilt measurement system 200 and/or the angular measurement device 100 is optimized.

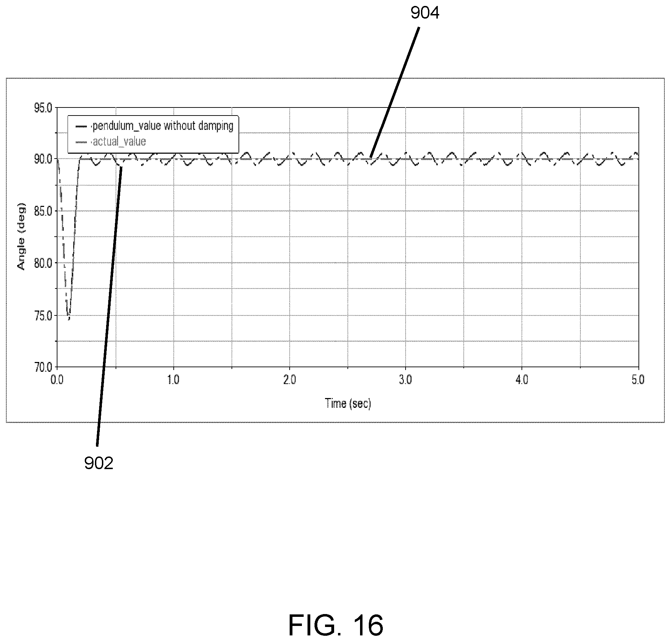

FIG. 16 represents a graph illustrating the difference between the angular displacement of the suspended element 102 when the suspended element 102 is provided with and without pre-determined damping, as has been discussed previously. Line 902 represents the angular displacement of the suspended element 102 when no pre-determined damping is provided to the suspended element 102. Without damping, the angular displacement of the suspended element 102 may be affected due to undesirable oscillations which may occur due to inertia of the suspended element 102. Therefore, line 902 is not the actual value of the angular displacement of the suspended element 102. Line 904 represents actual value of the angular displacement of the suspended element 102. When a pre-determined damping is provided to the suspended element 102, the undesirable effects caused due to inertia of the suspended element 102 can be negated. Also, by damping the suspended element 102, adverse effects of vibrations and noise can be eliminated. Therefore, a pre-determined damping is provided to the suspended element so that the value obtained substantially conforms with the actual value of the angular displacement of the suspended element. Accordingly, the angle of tilt of the fixable base 106 or the component can be determined based on the actual value of the angular displacement of the suspended element 102 and, hence, can be accurately determined, for instance, despite the presence of vibrations in the mechanical system.

Various modifications of the disclosed embodiments, as well as alternate embodiments of the claimed subject matter, will become apparent to persons skilled in the art upon reference to the description of the subject matter. It is therefore contemplated that such modifications can be made without departing from the scope of the present invention as defined in the appended claims.

## Claims

1. A tilt measurement system (200) for estimating angle of tilt of a component, the tilt measurement system (200) comprising:
an angular measurement device (100) comprising:
a fixable base (106) mounted to the component;
a suspended element (102) mounted to the fixable base (106), wherein
the suspended element (102) is capable of exhibiting oscillatory movement with respect to the fixable base (106); and
an angular position sensor (104) operably coupled to the suspended element (102) to measure an angular displacement of the suspended element (102) from a neutral position of the suspended element (102) measured with respect to the fixable base (106);
the tilt system being **characterized in that** it comprises:
an angular rate measurement sensor (204) mounted to the component, wherein the angular rate measurement sensor (204) measures rate of change of orientation of the component; and
a control unit (206) operably coupled to the angular position sensor (104) and the angular rate measurement sensor (204), wherein the control unit (206) is configured to:
receive a first set of inputs from the angular position sensor (104);
receive a second set of inputs from the angular rate measurement sensor (204); and
estimate an angle of tilt of the component with respect to a reference datum, based on the first set of inputs and the second set of inputs.

2. The tilt measurement system (200) as claimed in claim 1, wherein the neutral position of the suspended element (102) is the equilibrium position.

3. The tilt measurement system (200) as claimed in claim 1, wherein the angular measurement device (100) further comprises a damping unit (108) to dampen the oscillatory movement of the suspended element (102).

4. The tilt measurement system (200) as claimed in claim 1, wherein the suspended element (102) is a buoyant pendulum.

5. The tilt measurement system (200) as claimed in claim 1, wherein the angular position sensor (104) is one of a potentiometer, an optical sensor, an encoder, and a hall-effect sensor.

6. The tilt measurement system (200) as claimed in claim 1, wherein the control unit (206) further comprises a Bayesian filter, wherein the Bayesian filter causes the control unit (206) to:
estimate an error associated with the first set of inputs;
estimate an error associated with the second set of inputs;
eliminate the errors associated with the first and second set of inputs to obtain a fused output; and
estimate the angle of tilt of the component in accordance with the fused output.

7. The tilt measurement system (200) as claimed in claim 1, wherein the control unit (206) further comprises a Fusion filter, wherein the Fusion filter causes the control unit (206) to:
estimate an error associated with the first set of inputs;
estimate an error associated with the second set of inputs;
eliminate the errors associated with the first and second set of inputs to obtain a fused output; and
estimate the angle of tilt of the component in accordance with the fused output.

8. The tilt measurement system (200) as claimed in claim 1, wherein the angular rate measurement sensor (204) is a MEMS gyroscopic sensor.

9. The tilt measurement system (200) as claimed in claim 1, further comprising an accelerometer sensor (400) operably coupled to the control unit (206), wherein the control unit (206) is to:
receive a third set of inputs from the accelerometer sensor (400); and
estimate the angle of tilt of the component based on the third set of inputs.

10. A vehicle (600), comprising a vehicular frame having a tilt measurement system (200) as claimed in any one of claims 1-9 is mounted to the vehicular frame (602).

11. The vehicle (600) as claimed in claim 10, wherein the tilt measurement system (200) is located at a distance of 400mm to 900 mm from the ground.

12. A method for measuring tilt angle of a component, the method comprising:
determining, by an angular position sensor (104), an angular displacement of a suspended element (102) operably coupled to the angular position sensor (104), wherein the angular position sensor (104) and the suspended element (102) are mounted to a fixable base (106) mounted to the component the method being **characterized in that** it further comprises the steps of:
determining, by an angular rate measurement sensor (204), rate of change of orientation of the fixable base (106);
receiving, by a control unit (206) operably coupled to the angular position sensor (104), a first set of inputs based on the angular displacement of the suspended element (102);
receiving, by the control unit (206) operably coupled to the angular rate measurement sensor (204), a second set of inputs based on the rate of change of orientation of the component; and
processing, by the control unit (206), the first and second set of inputs to estimate the angle of tilt of the component with respect to a reference datum.

13. The method as claimed in claim 12, the method comprising:
estimating an error associated with the first set of inputs;
estimating an error associated with the second set of inputs;
eliminating the errors associated with the first and second set of inputs to obtain a fused output; and
estimating the angle of tilt of the fixable base (106) in accordance with the fused output.

14. The method as claimed in claim 12, the method comprising:
receiving a third set of inputs from the accelerometer sensor (400); and
processing, by the control unit (206), the third set of inputs to estimate the angle of tilt of the component.

## Patentansprüche

1. Neigungsmesssystem (200) zum Abschätzen des Neigungswinkels eines Bauteils, wobei das Neigungsmesssystem (200) Folgendes umfasst:
eine Winkelmessvorrichtung (100) mit:
eine fixierbare Basis (106), die an dem Bauteil befestigt ist;
ein aufgehängtes Element (102), das an der fixierbaren Basis (106) montiert ist, wobei das aufgehängte Element (102) in der Lage ist, eine oszillierende Bewegung in Bezug auf die fixierbare Basis (106) durchzuführen; und
einen Winkelpositionssensor (104), der betriebsmäßig mit dem aufgehängten Element (102) gekoppelt ist, um eine Winkelverschiebung des aufgehängten Elements (102) aus einer neutralen Position des aufgehängten Elements (102), gemessen in Bezug auf die fixierbare Basis (106), zu messen;
wobei das Neigungssystem **dadurch gekennzeichnet ist, dass** es umfasst:
einen Winkelgeschwindigkeitsmesssensor (204), der an dem Bauteil angebracht ist, wobei der Winkelgeschwindigkeitsmesssensor (204) die Änderungsgeschwindigkeit der Ausrichtung des Bauteils misst; und
eine Steuereinheit (206), die betriebsmäßig mit dem Winkelpositionssensor (104) und dem Winkelgeschwindigkeitsmesssensor (204) gekoppelt ist, wobei die Steuereinheit (206) konfiguriert ist, um:
einen ersten Satz von Eingaben von dem Winkelpositionssensor (104) zu empfangen;
einen zweiten Satz von Eingaben von dem Winkelgeschwindigkeitsmesssensor (204) zu empfangen; und
einen Neigungswinkel des Bauteils in Bezug auf einen Referenzwert auf der Grundlage des ersten Satzes von Eingaben und des zweiten Satzes von Eingaben zu schätzen.

2. Neigungsmesssystem (200) nach Anspruch 1, wobei die Neutralstellung des aufgehängten Elements (102) die Gleichgewichtsstellung ist.

3. Neigungsmesssystem (200) nach Anspruch 1, wobei die Winkelmessvorrichtung (100) ferner eine Dämpfungseinheit (108) zur Dämpfung der Schwingungsbewegung des aufgehängten Elements (102) umfasst.

4. Neigungsmesssystem (200) nach Anspruch 1, wobei das aufgehängte Element (102) ein schwimmendes Pendel ist.

5. Neigungsmesssystem (200) nach Anspruch 1, wobei der Winkelpositionssensor (104) ein Potentiometer, ein optischer Sensor, ein Encoder oder ein Halleffektsensor ist.

6. Neigungsmesssystem (200) nach Anspruch 1, wobei die Steuereinheit (206) ferner einen Bayes'schen Filter umfasst, wobei der Bayes'sche Filter die Steuereinheit (206) veranlasst,:
einen Fehler zu schätzen, der mit dem ersten Satz von Eingaben verbunden ist;
einen Fehler zu schätzen, der mit dem zweiten Satz von Eingaben verbunden ist;
Eliminieren der Fehler, die mit dem ersten und zweiten Satz von Eingaben verbunden sind, um eine fusionierte Ausgabe zu erhalten; und
Schätzung des Neigungswinkels des Bauteils in Übereinstimmung mit der fusionierten Ausgabe.

7. Neigungsmesssystem (200) nach Anspruch 1, wobei die Steuereinheit (206) ferner einen Fusionsfilter umfasst, wobei der Fusionsfilter die Steuereinheit (206) veranlasst,:
einen Fehler abzuschätzen, der mit dem ersten Satz von Eingaben verbunden ist
einen Fehler abzuschätzen, der mit dem zweiten Satz von Eingaben verbunden ist;
die mit dem ersten und zweiten Satz von Eingaben verbundenen Fehler zu eliminieren, um eine fusionierte Ausgabe zu erhalten; und
Schätzung des Neigungswinkels des Bauteils in Übereinstimmung mit der fusionierten Ausgabe.

8. Neigungsmesssystem (200) nach Anspruch 1, wobei der Winkelgeschwindigkeitsmesssensor (204) ein MEMS-Gyroskopsensor ist.

9. Neigungsmesssystem (200) nach Anspruch 1, das ferner einen Beschleunigungssensor (400) umfasst, der betriebsmäßig mit der Steuereinheit (206) gekoppelt ist, wobei die Steuereinheit (206) dazu dient,:
einen dritten Satz von Eingaben von dem Beschleunigungssensor (400) zu empfangen; und
den Neigungswinkel des Bauteils auf der Grundlage des dritten Satzes von Eingaben zu schätzen.

10. Fahrzeug (600), das einen Fahrzeugrahmen (602) umfasst, an dem ein Neigungsmesssystem (200) nach einem der Ansprüche 1 bis 9 angebracht ist.

11. Fahrzeug (600) nach Anspruch 10, wobei das Neigungsmesssystem (200) in einem Abstand von 400 mm bis 900 mm vom Boden angeordnet ist.

12. Verfahren zum Messen des Neigungswinkels eines Bauteils, wobei das Verfahren umfasst:
Bestimmen, durch einen Winkelpositionssensor (104), einer Winkelverschiebung eines aufgehängten Elements (102), das betriebsmäßig mit dem Winkelpositionssensor (104) gekoppelt ist, wobei der Winkelpositionssensor (104) und das aufgehängte Element (102) an einer an dem Bauteil befestigten fixierbaren Basis (106) angebracht sind;
wobei das Verfahren **dadurch gekennzeichnet ist, dass** es ferner die folgenden Schritte umfasst:
Bestimmen der Änderungsrate der Orientierung der fixierbaren Basis (106) durch einen Winkelgeschwindigkeitsmesssensor (204);
Empfangen, durch eine Steuereinheit (206), die betriebsmäßig mit dem Winkelpositionssensor (104) gekoppelt ist, eines ersten Satzes von Eingaben, die auf der Winkelverschiebung des aufgehängten Elements (102) basieren;
Empfangen, durch die Steuereinheit (206), die betriebsmäßig mit dem Winkelgeschwindigkeitsmesssensor (204) gekoppelt ist, eines zweiten Satzes von Eingaben, basierend auf der Änderungsrate der Orientierung des Bauteils; und
Verarbeiten des ersten und zweiten Satzes von Eingaben durch die Steuereinheit (206), um den Neigungswinkel des Bauteils in Bezug auf einen Referenzwert zu schätzen.

13. Verfahren nach Anspruch 12, wobei das Verfahren umfasst:
Schätzen eines Fehlers, der mit dem ersten Satz von Eingaben verbunden ist;
Schätzen eines Fehlers, der mit dem zweiten Satz von Eingaben verbunden ist;
Eliminieren der Fehler, die mit dem ersten und zweiten Satz von Eingaben verbunden sind, um eine fusionierte Ausgabe zu erhalten; und
Schätzen des Neigungswinkels der fixierbaren Basis (106) in Übereinstimmung mit der fusionierten Ausgabe.

14. Verfahren nach Anspruch 12, wobei das Verfahren umfasst:
Empfangen eines dritten Satzes von Eingaben von dem Beschleunigungssensor (400); und
Verarbeiten des dritten Satzes von Eingaben durch die Steuereinheit (206), um den Neigungswinkel des Bauteils zu schätzen.

## Revendications

1. Système de mesure de l'inclinaison (200) pour estimer l'angle d'inclinaison d'un composant, le système de mesure de l'inclinaison (200) comprenant :
un dispositif de mesure angulaire (100) comprenant :
une base fixable (106) montée sur le composant ;
un élément suspendu (102) monté sur la base fixable (106), l'élément suspendu (102) pouvant présenter un mouvement oscillatoire par rapport à la base fixable (106) ; et
un capteur de position angulaire (104) couplé de manière opérationnelle à l'élément suspendu (102) pour mesurer un déplacement angulaire de l'élément suspendu (102) par rapport à une position neutre de l'élément suspendu (102) mesurée par rapport à la base fixable (106) ;
le système d'inclinaison est **caractérisé en ce qu'**il comprend :
un capteur de mesure de la vitesse angulaire (204) monté sur le composant, dans lequel le capteur de mesure de la vitesse angulaire (204) mesure la vitesse de changement d'orientation du composant; et
une unité de commande (206) couplée de manière opérationnelle au capteur de position angulaire (104) et au capteur de mesure de la vitesse angulaire (204), dans laquelle l'unité de commande (206) est configurée pour :
recevoir un premier ensemble d'entrées du capteur de position angulaire (104) ;
recevoir un deuxième ensemble d'entrées du capteur de mesure de la vitesse angulaire (204) ; et
estimer un angle d'inclinaison du composant par rapport à un point de référence, sur la base de la première série d'entrées et de la deuxième série d'entrées.

2. Système de mesure de l'inclinaison (200) selon la revendication 1, dans lequel la position neutre de l'élément suspendu (102) est la position d'équilibre.

3. Système de mesure de l'inclinaison (200) selon la revendication 1, dans lequel le dispositif de mesure angulaire (100) comprend en outre une unité d'amortissement (108) pour amortir le mouvement oscillatoire de l'élément suspendu (102).

4. Système de mesure de l'inclinaison (200) selon la revendication 1, dans lequel l'élément suspendu (102) est un pendule flottant.

5. Système de mesure de l'inclinaison (200) selon la revendication **1,** dans lequel le capteur de position angulaire (104) est un potentiomètre, un capteur optique, un encodeur et un capteur à effet Hall.

6. Système de mesure de l'inclinaison (200) selon la revendication **1,** dans lequel l'unité de commande (206) comprend en outre un filtre bayésien, dans lequel le filtre bayésien amène l'unité de commande (206) à :
estimer une erreur associée à la première série d'entrées ;
estimer une erreur associée à la deuxième série d'entrées ;
éliminer les erreurs associées au premier et au deuxième ensemble d'entrées pour obtenir une sortie fusionnée ; et
estimer l'angle d'inclinaison du composant en fonction de la sortie fusionnée.

7. Système de mesure de l'inclinaison (200) selon la revendication **1,** dans lequel l'unité de commande (206) comprend en outre un filtre de fusion, dans lequel le filtre de fusion amène l'unité de commande (206) à :
estimer une erreur associée à la première série d'entrées ;
estimer une erreur associée à la deuxième série d'entrées ;
éliminer les erreurs associées au premier et au deuxième ensemble d'entrées pour obtenir une sortie fusionnée ; et
estimer l'angle d'inclinaison du composant en fonction de la sortie fusionnée.

8. Système de mesure de l'inclinaison (200) selon la revendication **1,** dans lequel le capteur de mesure de la vitesse angulaire (204) est un capteur gyroscopique MEMS.

9. Système de mesure de l'inclinaison (200) selon la revendication **1,** comprenant en outre un capteur d'accéléromètre (400) couplé de manière opérationnelle à l'unité de commande (206), dans lequel l'unité de commande (206) est destinée à :
recevoir une troisième série d'entrées du capteur d'accéléromètre (400) ; et
estimer l'angle d'inclinaison du composant sur la base du troisième ensemble d'entrées.

10. Véhicule (600), comprenant un châssis de véhicule avec un système de mesure de l'inclinaison (200) tel que revendiqué dans l'une des revendications 1 à 9 est monté sur le châssis du véhicule (602).

11. Véhicule (600) selon la revendication 10, dans lequel le système de mesure de l'inclinaison (200) est situé à une distance de 400 mm à 900 mm du sol.

12. Méthode de mesure de l'angle d'inclinaison d'un composant, comprenant :
la détermination, par un capteur de position angulaire (104), d'un déplacement angulaire d'un élément suspendu (102) couplé de manière opérationnelle au capteur de position angulaire (104), dans lequel le capteur de position angulaire (104) et l'élément suspendu (102) sont montés sur une base fixable (106) montée sur le composant;
le procédé est **caractérisé en ce qu'**il comprend en outre les étapes de:
la détermination, par un capteur de mesure de la vitesse angulaire (204), de la vitesse de changement d'orientation de la base fixable (106);
recevoir, par une unité de commande (206) couplée de manière opérationnelle au capteur de position angulaire (104), une première série d'entrées basées sur le déplacement angulaire de l'élément suspendu (102) ;
la réception, par l'unité de commande (206) couplée de manière opérationnelle au capteur de mesure de la vitesse angulaire (204), d'une deuxième série d'entrées basées sur la vitesse de changement d'orientation du composant ; et
traiter, par l'unité de commande (206), la première et la deuxième série d'entrées pour estimer l'angle d'inclinaison du composant par rapport à un point de référence.

13. Méthode selon la revendication 12, la méthode comprenant :
l'estimation d'une erreur associée à la première série d'entrées ;
l'estimation d'une erreur associée à la deuxième série d'entrées ;
l'élimination des erreurs associées au premier et au deuxième ensemble d'entrées pour obtenir une sortie fusionnée ; et
l'estimation de l'angle d'inclinaison de la base fixable (106) en fonction de la sortie fusionnée.

14. Méthode selon la revendication 12, comprenant :
la réception d'un troisième ensemble d'entrées provenant du capteur d'accéléromètre (400) ; et
le traitement, par l'unité de commande (206), du troisième ensemble d'entrées pour estimer l'angle d'inclinaison du composant.
